# EUROPEAN PATENT APPLICATION

(11) **EP 4 699 788 A2**
(43) Date of publication of application: **25.02.2026**
(21) Application number: 25226065.8
(22) Date of filing: 04.08.2022
(51) Int. Cl.: B29C 64/245

(54) **METHOD AND DEVICE FOR PREPARING PLATES TO TREAT ITEMS IN THE PAPER PROCESSING INDUSTRY**

(62) Divisional of application: 22762005.1
(71) Applicant: SEI S.p.A., 24035 Curno (BG) (IT)
(72) Inventor: FUSTINONI, Ettore, 24035 Curno BG (IT)
(74) Representative: Gislon, Gabriele

(57) **Abstract**

In an additive manufacturing process method for preparing plates (22,32) for cylinders (20,30) to treat items of the paper processing industry (40), the plates (22,32) comprise a base (22a, 32a) having a support surface (21) and treating profile elements (25, 35) on said support surface (21) of said base (22a, 32a), the support surface (21) of said base (22a, 32a), or said platform (203), is formed or pretreated to receive and retain a powder of polymeric material.

## Description

### FIELD OF THE INVENTION

The present invention relates to a method and a device for preparing plates adapted to be fixed to the outer surfaces of cylinders to treat items in the paper processing industry.

The term "paper processing industry" is herein and in the following used to designate the field of the art providing for the use and transformation and/or decoration of cardboard, card stock and like materials, for example for making cards, postcards, as well as to be folded to make boxes, receptacles and the like for example for packaging and micro-packaging, and for the impression of decorations, or wording, or symbols on said materials, from portions of material that are appropriately treated, namely folded, cut and/or decorated.

The expression "treating of items of the paper processing industry" is herein and in the following used to indicate methods such as, for example, creasing or embossing of cardboard, card stock, corrugated cardboard and like materials.

### BACKGROUND OF THE INVENTION

Known processes are carried out on items in the paper processing industry, comprising creasing, i.e. folding lines made on cardboards or card stocks, avoiding deformations and cracking, or embossing, namely incisions or impressions, of a simple motif or design on cardboards or card stocks. Creases and embossing can be made by using projecting profiles and if necessary corresponding hollow profiles arranged on respective plates fastened on counter-rotating rollers. The portion of cardboard or card stock to be treated is interposed between the counter-rotating rollers, wherein it is shaped and impressed or incised by means of the projecting profiles coupled with the relative hollow profiles.

Known apparatuses for creasing or embossing items of the paper processing industry are provided with two counter-rotating cylinders accommodating flexible plates which, in turn, have projections and hollows adapted to carry out the treating of cardboards and card stocks.

One of the cylinders is provided with a plate having projections, whereas the opposing cylinder is provided with a plate having seats or hollows (and in general recesses) corresponding to said projections. The projections and hollows cooperate to carry out the treating of cardboards and card stocks.

In such apparatuses, treating profiles for creasing are used, which are applied on the plates which in turn are installed on counter-rotating cylinders.

For example, the arrangement of treating profiles by means of an additive manufacturing process using extruded fused material from by a nozzle or ejector such as Fused Deposition Modeling (FDM) or 3D printing are known.

In the extrusion process the shape (and in particular the section) of the extruded material depends on the shape of the extrusion section. This necessary feature of the extrusion process inevitably restricts the obtainable shape to the extrusion shape.

Other different processes and apparatuses for obtaining treating profiles of items of the paper processing industry are known for example from document WO2014013481, in which a powder material is sintered by means of a laser beam into a rule on a substrate for forming a treating profile element.

The laser sintering formation process forming the projecting element from powder material is different from the Fused deposition modelling or 3D printing in fact the latter are carried out by deposition of the fused material extruded by a nozzle.

Said system using sintering of powder material allows greater precision and accuracy in arrangement of the profile elements, due to the use of the laser for the creation of the required profile element from the powder material, compared to other known processes and devices using FDM technique.

On the other hand, metallic powders are often expensive, and require very high temperatures to fuse.

Furthermore, treating profiles obtained by means of known processes and apparatuses show a not uniform fusion of the powder layer, such that unevenness is created between the overlapping layers of powder, which could lead to an undesired not effective sintering leading to irregularities between the adjacent layers.

The object of the present invention is to further improve the process and the device for preparing plates from powder materials, further reducing the time necessary for preparing the plates in addition to increasing the versatility of the preparation process and device, guaranteeing high precision in the shape and dimensions of the treating profile produced.

The object of the present invention is to provide a method and a device for preparing treating plates of items of the paper processing industry which allow arrangement, rapidly and simply, and also precisely, of the treating profiles according to the treating pattern to be produced.

A further object of the present invention is to provide a method and a device for preparing treating plates which increase the production precision and flexibility of the different creases required in the various production processes.

A further object of the present invention is to provide a method and a device for preparing treating plates which overcome the above drawbacks due to the need for curing of the material used and the need to carry out a subsequent curing procedure of polymerizable material, which is costly and time-consuming.

A further object of the present invention is to offer the possibility of obtaining treating profiles of the desired shape and dimensions.

### SUMMARY OF THE INVENTION

The present invention is related to a method for preparing plates for cylinders to treat items of the paper processing industry, wherein the plates comprise a base having a support surface and treating profile elements on said support surface of said base, the method comprising an additive manufacturing process, and comprising the following steps:
a. acquiring a treating pattern to be produced on the item of the paper processing industry or acquiring the shape of said base of the plates and said treating pattern;
b. creating a 3D reference model of at least the treating profile elements according to the treating pattern or a 3D reference model of said base and of said treating profile elements;
c. distributing at least one layer of a powder of polymeric material, preferably a powder of thermoplastic polymeric material, on said support surface of said base or on a platform;
d. premelting the deposited layer of powder of polymeric material by means of at least one laser apparatus, which is operated to scan the cross-sections on each layer with at least one first scan, in accordance with the 3D reference model of said treating profile elements or of both said base and said treating profile elements;
e. selectively raising the temperature value of the deposited layer of powder of polymeric material and sintering the deposited layer of powder of polymeric material by means of said laser apparatus, which is operated to scan the premelted cross-sections on each layer with at least one second scan, in accordance with said 3D reference model of said treating profile elements or of both said base and said treating profile elements,
wherein a new layer of said powder of polymeric material is deposited after the scanning operation of at least one cross-section by the laser apparatus is performed. It has to be noted that the term "premelting" is used to indicate the application of energy from a laser apparatus to the powder layer, in order to increase the temperature of the powder material, wherein the temperature of the powder is kept below its melting point, and preferably 20°C - 50°C below the melting point of the powder material.

Advantageously, the steps d. and e. providing at least two consecutive scans of the deposited layer of powder by means of the laser apparatus, allows a uniform premelt and subsequent uniform sinter of the scanned cross-sections of each layer, avoiding that unevenness is created between the overlapping layers of powder, which could lead to an undesired irregularities between the adjacent layers. This uniform premelt and sinter are obtained by means of the laser apparatus, and no heating step of the polymer powder by conduction or irradiation is necessary.

This feature saves time and energy with respect to the known methods, and allows to provide plates having a more uniform and smooth appearance and a more solid and resistant structure.

According to an aspect, said at least one first scan and said at least one second scan are provided by said laser apparatus operating in continuous-wave mode.

Advantageously, the continuous wave mode allows uniform heating of the scanned cross sections of the layer of powder.

According to an aspect, said second scan starts in a time interval comprised between 0 ms and 50 ms, preferably between 20 ms and 50 ms, more preferably substantially equal to 30 ms after the end of the first scan.

Advantageously, tests carried out with such a time interval between the first and the second have shown that this interval allows uniform pre-melting and sintering of the powder layer. Longer time intervals lead to non-melting of the powder, which has time to cool down between subsequent scans.

According to an aspect, said support surface of said base or said platform is formed or pretreated to receive and retain the powder of polymeric material.

According to an aspect, the method comprises a preparatory step of coating said support surface of said base or said platform, preferably with an electrostatic coating to provide or increase the capacity of said support surface of retaining said powder of polymeric material.

Advantageously, according to a possible embodiment, this preparatory step allows to create electrostatic bonding between the first layers of powder deposited and the support surface, which allows to retain the powder material while it is scanned by the laser, by increasing the bond interaction between the first layer of powder deposited and the support surface.

According to an aspect, the method comprises a preparatory step of scanning said support surface by means of a laser apparatus providing a preparatory scan, to provide roughness or increase the roughness of said support surface to provide or increase the capacity of said support surface of retaining said powder of polymeric material.

Advantageously, this preparatory scan allows to create a surface roughness which allows to retain the powder material while it is scanned by the laser, by increasing the interaction between the first layer of powder deposited and the support surface, thus avoiding slippage and non uniform distribution of the powder. Furthermore, the presence of a rough surface favors the mutual fusion between the first layer of deposited powder and the support surface.

The behaviour which has been observed, with regard to the polymeric materials used for the support surface and with regard to the conformation of the support surface of the base, is that the powder to be deposited comprises very small particles, ranging from 0 µm to 100 µm and the support surface does not have a surface conformation suitable to retain such small particles. It has been noted that during the deposition of the first layer of powder, empty zones are created, where the powder is not retained by the support surface, due to the surface conformation of the support surface, not adapted to retain powder. By modifying the surface conformation of the support surface, i.e. by creating a roughness on the support surface, reliefs and depressions are created of such a size as to retain the grains of powder.

Advantageously, the rough surface provided with the preparatory scan of the laser apparatus on the support surface, allows a good and uniform distribution and retention of the deposited powder on the support surface, also avoiding the need of preheating the support surface.

The action of the preparatory scan, provided by the laser apparatus, exerts an action on the base, aimed at modifying its surface conformation, providing a rough surface on the support surface of the base which can comprise a foaming, or pattern with a plurality of straight adjacent lines, or curved adjacent lines, or a plurality of dots, or a combination of one or more of the preceding.

In particular, the presence of a rough surface comprising such a foaming, favors the mutual fusion between the first layer of deposited powder and the support surface.

According to an aspect, the minimum roughness value of the support surface is expressed in terms of arithmetic average of the roughness profile (Ra), and it is comprised between 10 µm and 100 µm, preferably between 15 µm and 50 µm, and more preferably substantially equal to 20 µm.

Advantageously, this arithmetic average of the roughness profile of the support surface allows to retain the particles of deposited powder.

It should be noted that the pattern provided on the base by the laser apparatus for providing a rough surface on the support surface, is made according to the particle size of the deposited powder. In other words, the pattern is in any case such as to include protrusions or reliefs and corresponding grooves suitable for accommodating the deposited powder, which has a particle size comprised between 30 µm and 100 µm,

According to an aspect said preparatory scan provides a foaming on the support surface to provide roughness or increase the roughness of said support surface.

In fact, the base can have a preformed support surface having *per* se an arithmetic average of the roughness profile (Ra) in the range of 10 µm - 100 µm, or can have a support surface which is laser processed to obtain such roughness. Arithmetic average of the roughness profile Ra is a known parameter that could be for example calculated as disclosed in ISO 4287:1997 or the revised version ISO 21920-2:2021. According to an aspect, said roughness comprises reliefs having a height comprised between 20 µm and 60 µm, preferably of about 40 µm.

Advantageously, the dimension of reliefs is suitable for accommodating the particle size of the deposited powder.

According to an aspect, said preparatory scan is provided by said laser apparatus operating in pulsed mode.

Advantageously, when the preparatory scan is provided by the laser apparatus operating in pulsed mode, gas bubbles are created in the polymeric material of the support surface, which are included in the material during the cooling-down phase.

Because of the included gas, the volume of the affected polymeric material increases and the locations, which have been laser-processed, appear raised, preferably with reliefs having a height comprised between 20 µm and 60 µm, preferably of about 40 µm.

According to an aspect, said laser apparatus is operated in pulsed mode for providing said preparatory scan, and said laser apparatus is operated in continuous wave mode for providing said first and second scan.

In fact, the pulsed mode is in general not suitable for powder pre-melting and melting operations, as the generation of high power peaks would lead to superficial micro explosions of the scanned powder layer, which would not allow the uniform premelting and sintering of the powder.

Advantageously, the possibility of using two different laser operating modes allows to select the most suitable mode for the required operation, in view of the material to be scanned, and therefore allows better control of the power delivered and greater versatility of the apparatus.

According to an aspect, said laser apparatus provides a laser beam having a spot diameter comprised between 70 µm and 220 µm, preferably between 80 µm and 150 µm, and preferably equal to 90 µm.

However are not excluded embodiments wherein the spot diameter is higher than 220 µm to increase productivity.

Advantageously, according to preferred embodiments, the laser spot diameter can be chosen to have a high value, comprised between 150 µm and 200 µm, preferably of about 200 µm, in order to increase the productivity, while maintaining the same energy per unit area (for example of about 80 mJ/mm2). In this case a higher productivity is obtained, while reducing the resolution of the laser spot.

On the other hand, if a higher resolution is required, a smaller spot diameter can be chosen, comprised between 70 µm and 90 µm.

According to an aspect, said support surface is lowered along a vertical direction, along a vertical axis, when the scanning of each cross-section by the laser apparatus is completed, or viceversa.

According to an aspect said additive manufacturing process is a selective laser sintering (SLS) process.

According to an aspect said polymeric powder is distributed by means of a powder delivery system, which deposits said powder on the support surface of the base or on the platform so as to form at least one layer of powder, preferably a plurality of superimposed layers of powder, for scanning respective cross-sections for each layer of the powder of polymeric material in accordance with the 3D reference model provided in said step b).

According to an aspect said polymeric powder comprises one or more polymer such as polyamides (PA), Nylon 11, Nylon 12, polystyrenes (PS), thermoplastic elastomers (TPE), and polyaryletherketones (PAEK), polycarbonate, or a combination of one or more of them.

According to an aspect said polymeric powder comprises carbon or glass fibers, for example Alumide.

According to an aspect the laser apparatus can scan the polymeric powder along at least one axis (X), preferably along at least two axes (X, Y) perpendicular to each other and parallel to said support surface.

According to an aspect, the laser apparatus can scan the polymeric powder along axes in any orientation, preferably the scan step is performed along the direction of extension (preferably along a straight line) of the projecting element.According to an aspect a step of displaying and/or modification of the forming parameters of the treating profile elements or of both the base and the treating profile elements is provided, said parameters preferably comprising at least the height (of the laser apparatus relative to the deposition surface of the polymeric powder, the scanning speed of the laser apparatus relative to the deposition surface of the polymeric powder, the delivery speed of the polymeric powder, the spot dimension of the laser beam, or any combination of the preceding parameters.

The present invention is further directed to a method for preparing plates for cylinders to treat items of the paper processing industry, wherein the plates comprise a base having a support surface and treating profile elements on the support surface of said base, the method comprising an additive manufacturing process, and comprising the following steps:
a. acquiring a treating pattern to be produced on the item of the paper processing industry or acquiring the shape of said base of the plates and said treating pattern;
b. creating a 3D reference model of at least the treating profile elements according to the treating pattern or a 3D reference model of said base and of said treating profile elements;
c. distributing at least one layer of a powder of polymeric material, preferably a powder of thermoplastic polymeric material, on the support surface of the base or on a platform;
d. scanning the deposited layer of powder of polymeric material by means of said laser apparatus, for selectively sintering said deposited layer of powder of polymeric material, wherein said laser apparatus is operated to scan the cross-sections on each layer, in accordance with the 3D reference model of said treating profile elements or of both said base and said treating profile elements,
wherein said support surface or said platform is formed or pretreated to receive and retain the powder of polymeric material, and wherein a new layer of said powder of polymeric material is deposited after the scanning operation of at least one cross-section by the laser apparatus is performed.

According to an aspect the step of forming or pretreating the support surface or the platform to receive and retain the powder of polymeric material is carried out between steps b. and c.

According to an aspect, the method comprises a preparatory step of scanning said support surface by means of a laser apparatus providing a preparatory scan, to provide roughness or increase the roughness of said support surface to provide or increase the capacity of said support surface of retaining said powder of polymeric material.

Advantageously, as above discussed, the rough surface provided with the preparatory scan of the laser apparatus on the support surface of the base, allows a good and uniform distribution and retention of the deposited powder on the support surface, avoiding the need of preheating the support surface.

The action of the preparatory scan, provided by the laser apparatus, exerts an action on the base, aimed at modifying its surface conformation, providing a rough surface on the support surface which can comprise a foaming, or pattern for example with a plurality of straight adjacent lines, or curved adjacent lines, or a plurality of dots, or a combination of one or more of the preceding. According to an aspect, the method comprises a preparatory step of coating said support surface or said platform, preferably with an electrostatic coating, to provide or increase the capacity of said support surface of retaining said powder of polymeric material.

Advantageously, as above discussed, this preparatory step allows to create electrostatic bonding between the first layers of powder deposited and the support surface of the base or the platform, which allows to retain the powder, by increasing the bond interaction between the first layer of powder deposited and the support surface.

The present invention is further directed to a device for preparing plates for cylinders to treat items of the paper processing industry, preferably according to the method according to any one of the preceding claims, wherein said plates comprise a base having a support surface and treating profile elements on the support surface of said base, the device comprising at least one platform for supporting at least one layer of polymeric powder, at least one laser apparatus for scanning said at least one layer of polymeric powder, deposited on the platform, or on the support surface of the base according to a 3D model of the treating profile elements or of both said base and said treating profile elements.

According to an aspect, the support surface of the base is formed or pretreated to receive and retain the powder of polymeric material.

Advantageously, the support surface which is formed or pretreated to receive and retain the powder of polymeric material, allows a good and uniform distribution and retention of the deposited powder on the support surface, avoiding the need of preheating the support surface, and furthermore it enhance the relative fusion between the first layer of deposited powder and the support surface.

According to an aspect, said support surface has a roughness with a minimum roughness value expressed in terms of arithmetic average of the roughness profile Ra, comprised between 10 µm and 100 µm, preferably between 15 µm and 50 µm, and more preferably substantially equal to 20 µm.

According to an aspect, said platform is movable along at least one axis (Z), substantially perpendicular to the surface on which said support surface lies.

### BRIEF DESCRIPTION OF THE DRAWINGS

Further features and advantages of the invention will be disclosed in the following description, provided herein by way of example only and without limitations, with reference to the accompanying figures, in which:
- Figure 1 is a schematic representation of a machine for treating items of the paper processing industry;
- Figure 2 shows a possible embodiment of the device according to the invention for preparing embossing plates;
- Figure 3A shows a scanning step of a layer of powder material according to a possible embodiment of the present invention wherein the powder is arranged on the support surface of the base lying on the platform of the apparatus;

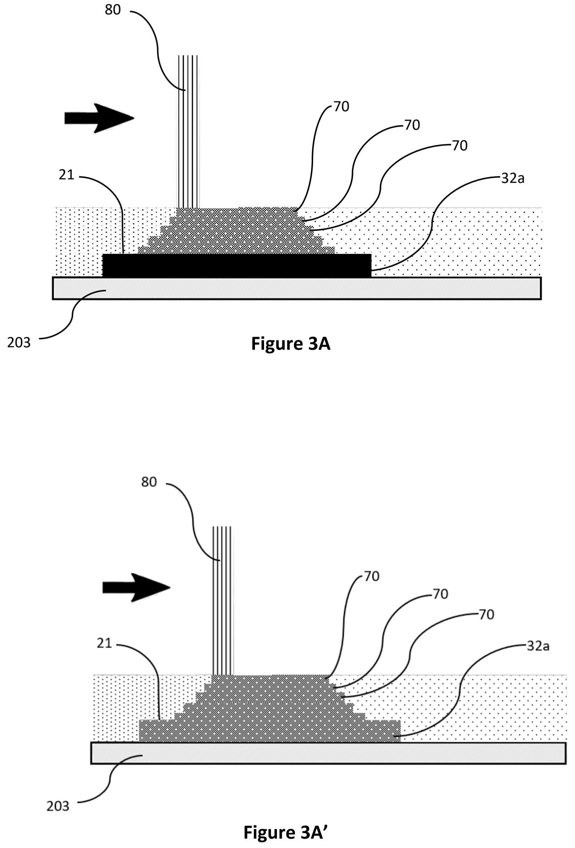

- Figure 3A' shows a scanning step of a layer of powder material according to a possible embodiment of the present invention wherein the powder is arranged on the platform of the apparatus and also at least part, or the complete base of the plate is also formed by the scan of powder material;

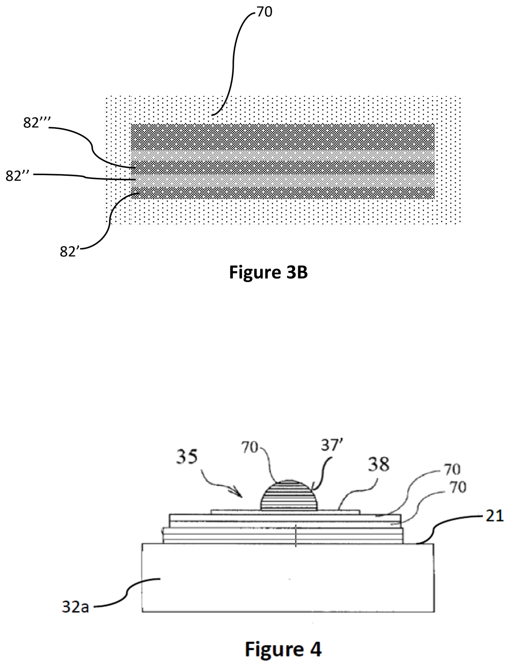

- Figure 3B shows a powder layer which is scanned by the laser apparatus according to a possible embodiment of the present invention, with several adjacent marking lines, overlapping in the transverse direction;
- Figure 4 schematically shows a section view of an embossing plate comprising a base and a male treating profile element;

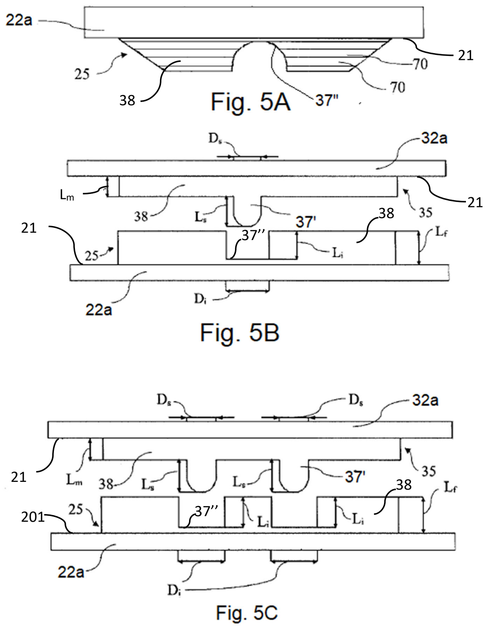

- Figure 5A schematically shows a section view of a possible embodiment of a female treating profile element formed on the base;
- Figures 5B and 5C show two possible section views of male and female treating profile elements according to the invention;

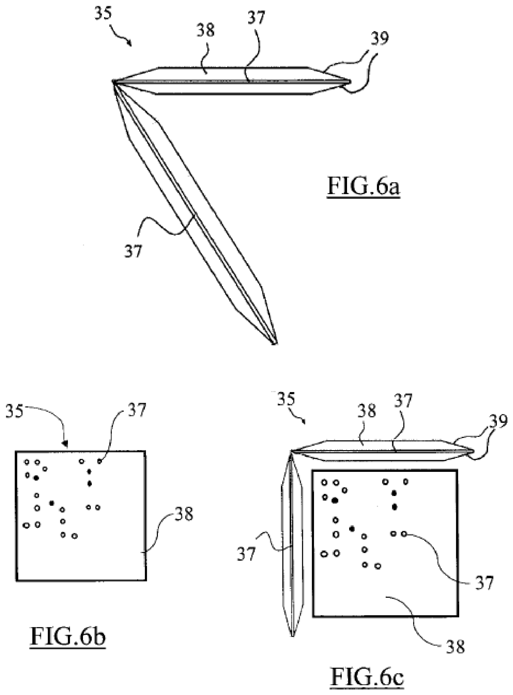

- Figure 6A shows two male profiles in an overhead view relatively arranged to form two creasing lines reciprocally inclined by an angle of less than 90°
- Figure 6B schematically shows an overhead view of a possible embodiment of profiles for embossing of Braille symbols;
- Figure 6C schematically shows an overhead view of a possible embodiment of the combination of the treating profiles shown in figures 6A and 6B.

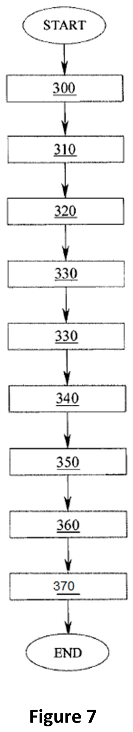

- Figure 7 shows a block diagram of a possible embodiment of the method according to the invention;

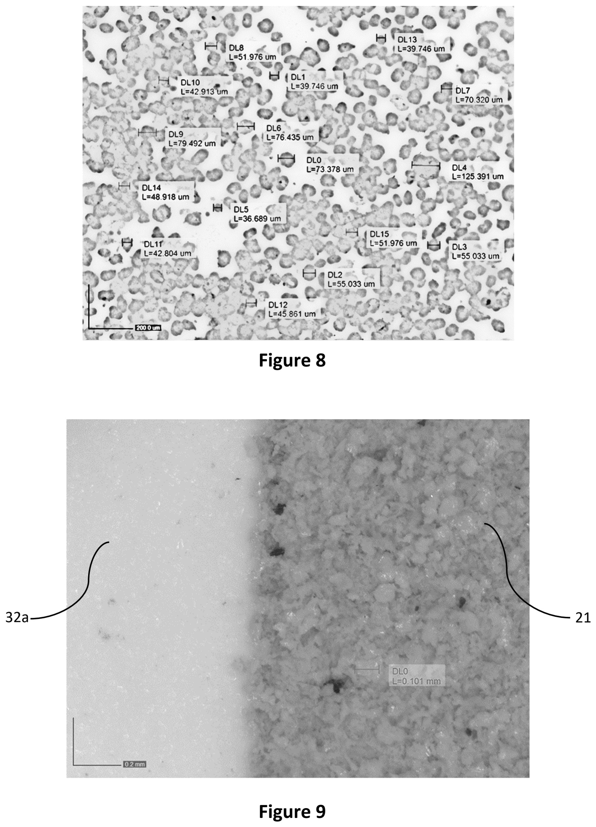

- Figure 8 is a magnified microscopy image of experimental samples of powder of Nylon12 (PA12);
- Figure 9 is a magnified microscopy image of the support surface provided with foaming by the action of laser apparatus;

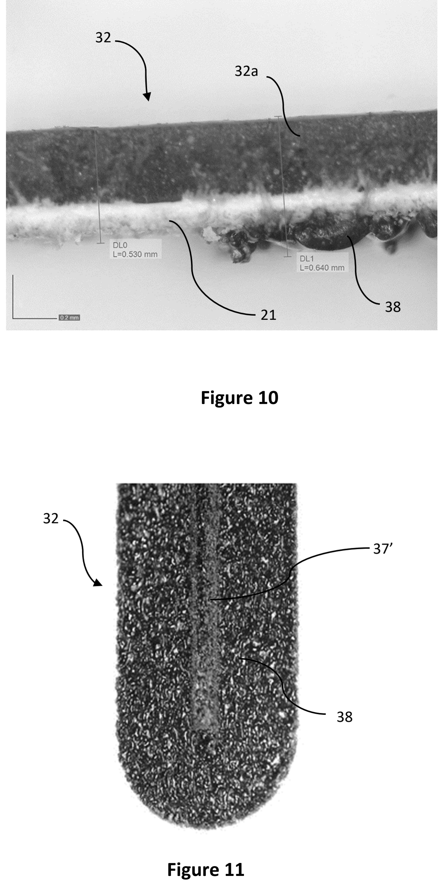

- Figure 10 is a magnified microscopy image of a portion of a base formed on the support surface provided with foaming by the action of laser apparatus;
- Figure 11 is a overhead view of an embossing plate according to the invention, having a base and a male treating profile element;

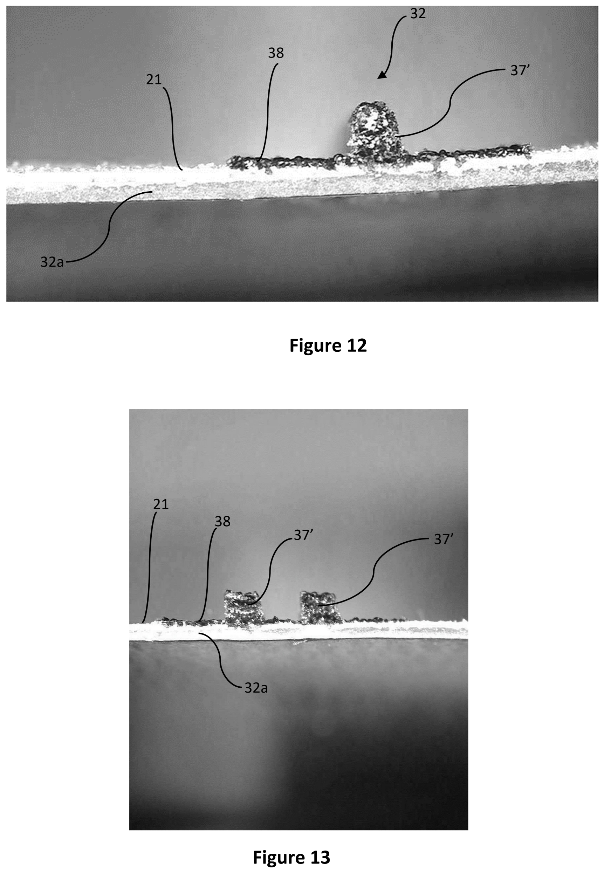

- Figure 12 is a front view of an embossing plate according to the invention, having a base with a support surface, and a male treating profile element;
- Figure 13 is a front view of an embossing plate according to the invention, having a base with a support surface, and two male treating profile elements;

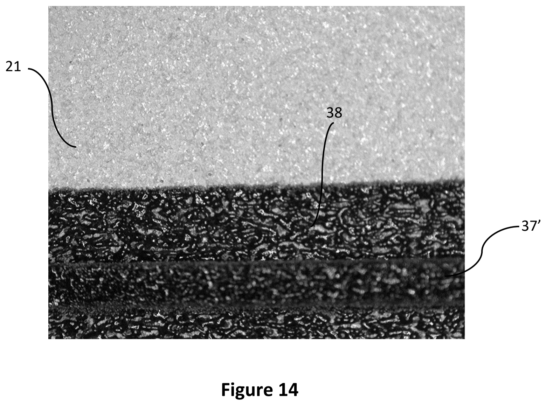

- Figure 14 is an overhead view of an embossing plate according to the invention, having a base with a support surface, and a male treating profile element.

### DETAILED DISCLOSURE OF SOME EMBODIMENTS OF THE PRESENT INVENTION

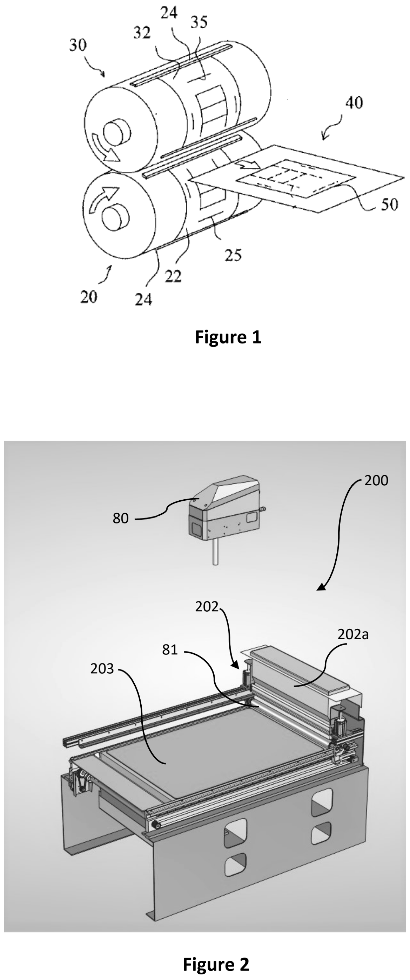

Figure 1 shows schematically a possible embodiment of a machine for treating items of the paper processing industry, such as cardboard, card stock and like materials, according to an embodiment of the present invention.

The treating is performed by means of the use of a treating machine which comprises a pair of counter-rotating cylinders.

The pair of cylinders is composed of a lower cylinder 20 and an upper cylinder 30 which rotate around their own axis of symmetry (central axis) in opposite directions, by means of appropriate movement means not shown.

With reference to figure 1, in one embodiment, on the outer surface of the upper cylinder 30 an upper embossing plate 32 is positioned by fastening means 24, while on the outer surface of the lower cylinder 20 a lower embossing plate 22 is positioned by fastening means 24.

In a further embodiment, the upper embossing plate 32 and the lower embossing plate 22 are positioned on respective cylinders by means of magnetic force.

The upper embossing plate 32 and the lower embossing plate 22 are preferably made of polymeric material, preferably thermoplastic polymers such as polyamides (PA), polystyrenes (PS), thermoplastic elastomers (TPE), and polyaryletherketones (PAEK), polycarbonate, or a combination of them, preferably magnetized, or they can be made of flexible metal elements. In other embodiments the plate 22, 32 comprises at least one layer made of metal or magnetic material and at least a layer made of polymeric material above indicated. The layer made of metal or magnetic material allows in use to constrain the plate on respective cylinder by means of magnetic force. In a preferred embodiment, the polymeric material is a nylon polymer, more preferably Nylon 12 (PA12), or the polymeric material comprises PET /PP, PE, HDPE, diamond plastic.

It should be noted that, according to an aspect, the embossing plate 22, 32 is preferably flexible, namely made so as to adapt to a curved surface, for example to the surface of a cylinder of a treating machine on which the plate is installed.

It should be noted that the term embossing plate is used to indicate a three-dimensional form, namely comprising a base 22a, 32a having a flat extension in which two dimensions are dominant with respect to the third dimension, and comprising treating profile elements (portions), in particular male or female type profiles 35, 25 protruding from the upper flat surface of said base 22a, 32a.

The base 22a, 32a have a support surface 21, preferably a substantially flat support surface 21, on which said male or female type profiles 35, 25 are formed in the process and apparatus according to the invention.

As will be better discussed in the following, it has to be noted that at least part of the base 22a, 32a of the plate, or the complete base 22a, 32a of the plate, can be also formed by the laser scan process according to the invention. After at least part, or the complete, base of the plate is formed the male or female treating profile 25, 35 are also formed by laser scan process according to the invention. This embodiment is schematically shown for example in figure 3A'.

Alternatively, a preformed base 22a, 32a can be provided and arranged on the platform 203 of the laser scan and powder distribution apparatus, and only the treating profile elements 25, 35 have to be formed (as for example shown in figure 3A).

With reference to figures 4 and 5A - 5C, the male type profile elements 35 form projections on the support surface 21 of the respective base 32a, while the female profile elements form hollows (recesses) on the support surface 21 of the respective base 22a.

According to a possible embodiment shown in figure 4, 11 and 12, the male treating profile elements 35 comprise a lower support portion 38 having an upper projecting portion 37' formed so as to present a protrusion from the lower support portion 38 (for example a rectilinear ridge, or for example a substantially cylindrical or rounded relief, or other substantially convex geometrical shapes for formation of the male profile 35), and the female treating profile elements 25, shown by way of example in figure 5A, comprise a lower support portion 38 formed so as to present a hollow 37" (for example a rectilinear seat or a circular or rounded seat, or other substantially concave geometrical shapes) adapted to be configured as housing seats for the convex projecting portion 37' of the male elements 35.

It should be noted that in a possible embodiment, the lower support portion 38 and the upper projecting portion 37' of a male profile element 35 do not have interruptions. It should be noted that the support 38 can assume different shapes if seen in an overhead plan view, according to the type of treating desired.

For example, according to a possible embodiment adapted to creasing, the plan view shape of the support 38 can be substantially rectangular (as illustrated, for example, in figures 6A and 6C) or can have for example a hexagonal shape with, at its ends, oblique sides 39 which preferably define an angle equal to or smaller than 90°, or can be provide with rounded end portions as for example shown in figures 11. In general, the plan view shape of the treating profile elements 25, 35, and in particular its lower support portion 38, can comprise an inclined side 39 or rounded end parts.

According to a further possible embodiment adapted for example to embossing an item of the paper processing industry, the plan view shape of the supports 38 can be substantially circular or have the profile of the pattern or form to be impressed.

The treating profile elements 35, 25 are positioned on the respective bases 32a, 22a so as to assume a given relative position such that the projections of the male profiles 35 match (are arranged corresponding to) the hollows of the female profiles 25, as shown by way of example in figures 5B and 5C.

The position of the male profiles 35 and the position of the female profiles 25 on the respective bases 22a, 32a is therefore determined so that the maximum deviation from the predefined relative position of the male profiles 35 and female profiles 32 is less than 0.15 mm, preferably less than 0.1 mm.

The base 22a, 32a can have a thickness between 0,5 mm and 1 mm, and can be shaped respectively on the outer surface of the upper cylinder 30 and on the outer surface of the lower cylinder 20. Other thicknesses can be used as required.

In order to form the embossing plates 22, 32, a treating pattern 50 to be produced on the item of the paper processing industry 40 is acquired, as shown in figure 1.

Consequently, a 3D reference model of at least the treating profile elements 25, 35 is created according to the treating pattern 50.

According to an aspect, a 3D reference model of both the base 22, 32 and the treating profile elements 25, 35 is created according to the treating pattern 50.

According to an aspect of the present invention, the 3D reference model of the treating profile elements 25, 35 or of both the treating profile elements 25, 35 and the respective base 22a, 32a is determined and then produced with a 3D modelling software, according to the treating pattern 50.

The pattern 50 can be stored in a memory unit associated with a control unit of the machine 200.

The 3D model of the treating profile elements 25, 35, and in particular the shape and/or the dimensions of said elements and/or the relative distance that said elements shall maintain when formed on the same base 22a, 32a, are determined according to the treating pattern 50 to be produced. Determination of the shape, dimensions and positioning of the profile elements on the base can be advantageously carried out by the control unit, according to the desired treating pattern 50.

In other words, the 3D model of the treating profile elements to be formed on the base 22a, 32a by means of an additive manufacturing process is obviously defined according to the desired treating pattern 50 and is therefore determined or calculated based on it.

For example, the shape and the dimensions of the 3D reference model of the profile elements 25, 35, and the relative distance which said elements shall maintain when formed on the same plate 22a, 32a, can be determined according to the shape and dimensions of the treating profile which is applied on the base.

For example, according to an embodiment adapted to carry out creasing of an item of the paper processing industry, the shape of the profiles can be rectangular or another polyhedral shape, for example of the type shown in figure 6A - 6C where two male profiles 35 are shown adapted for a creasing operation, seen from above.

In particular, the profile elements 25, 35 shown in figure 6A - 6C have a projecting upper portion 37' or hollows 37" which are positioned without interruption on a lower support portion 38, where the support portion 38 has a hexagonal shape with, at its ends, oblique sides 39 that define an angle equal to or smaller than 90°, preferably an acute angle smaller than 45°.

Figure 6C shows for example two adjacent male profiles 35 seen from above for the realization of two reciprocally inclined creasing lines.

It should be noted in general that the treating lines of the pattern 50 correspond preferably to the projecting portions 37', or hollows 37", which are arranged on the support 38. The treating profile elements 25, 35, having a generally rectilinear extension, which are formed on the support surface 21 of the base 22a,32a, are produced in such a way that the projecting portion 37' or the hollow 37" determines the desired creasing line based on the pattern 50.

In a further embodiment adapted to carry out embossing on an item of the paper processing industry, the shape of the profiles can be rectangular or another polyhedral shape.

In particular, the profile elements 25, 35 have a plurality of upper projecting portions 37', or hollows 37" with rounded shape, positioned without interruption on a lower support portion 38 (or directly on the base 22a,32a), where the support 38 has a rectangular shape.

As above mentioned, the treating profile elements 35, 25, or both the treating profile elements 35, 25 and the respective base 22a, 32a are formed by means of an additive manufacturing process, in particular by distributing at least one layer 70 of a powder of polymeric material, preferably a powder of thermoplastic polymeric material, on the support surface 21 of the respective base 22a, 32a, or on the platform 203 and then scanning, by means of at least one laser apparatus 80, the cross-sections on each layer 70, in accordance with the 3D reference model of the treating profile elements 25, 35 or of both the base 22a, 23a and the treating profile elements 25,35, for selectively raising the temperature value of the deposited layer 70 of powder of polymeric material, preferably up to a value around the melting point of the polymeric material, and selectively sintering the cross-sections of each layer of deposited powder of polymeric material.

As above mentioned, a preformed plate comprising a base 22a, 32a can be provided on a platform 203, and the treating profile elements 25, 35 can be formed on the support surface 21 of the base 22a, 32a, by means of an additive manufacturing process, by distributing at least one layer 70 of a powder of polymeric material, on the support surface 21 of the respective base 22a, 32a.

Alternatively, both the base 22a, 32a and the treating profile elements 25, 35 can be formed in one piece by means of an additive manufacturing process, by distributing at least one layer 70 of powder of polymeric material, on the platform 203 of the apparatus for forming the plate having a base 22a, 32a, and then by distributing at least one layer 70 of powder of polymeric material on the support surface 21 of the base 22a, 32a for forming the treating profile elements 25, 35.

A new layer 70 of powder of polymeric material is deposited after the scanning operation of each cross-section by the laser apparatus 80 is completed.

In the following, the additive manufacturing process according to the invention will be discussed in further details.

Preferably the treating profile elements 35, 25, or both the treating profile elements 35, 25 and the respective base 22a, 32a are formed by means of an additive manufacturing process, and in particular by means of selective laser sintering (SLS) process.

The base 22a, 32a and/or the treating profile elements 35, 25 are preferably made of polymeric material, preferably thermoplastic, for example polyamides (PA), polystyrenes (PS), thermoplastic elastomers (TPE), and polyaryletherketones (PAEK), polycarbonate, or a combination of them.

In a preferred embodiment, the polymeric material is a nylon polymer, more preferably Nylon 12 (PA12), or the polymeric material comprises PET /PP, PE, HDPE, diamond plastic.

In a possible embodiment the polymeric material of the base 22a, 32a and/or the treating profile elements 35, 25 comprise carbon or glass fibers, for example Alumide. According to a possible embodiment of the device for producing the embossing plates, as can be seen, for example, in the overhead view of figure 3B and in the section view of figure 3A, each of the male or female profile elements is preferably formed by the superimposition of several layers 70 of the powder of polymeric material, namely by means of successive deposition of several layers 70, and by raising the temperature value of the deposited layer 70 of powder of polymeric material, preferably up to a value around the melting point of the polymeric material, and selectively sintering the cross-sections on each consecutive layer 70.

As for example shown in figure 3A, the male profile elements 35 and/or the female profile elements 25 are formed directly on the support surface 21 of the respective base 22a, 32a positioned on a platform 203.

With reference to figure 2, according to possible embodiment of the present invention, the profile elements 25, 35, or both the profile elements 25, 35 and the respective base 22a, 32a, are formed by a device 200 for preparing embossing plates 22, 32 indicated below for the sake of simplicity also as SLS machine 200, provided with a laser apparatus 80 and with a platform 203.

According to an aspect, deposition of the powder of polymeric material is performed for example by means of a powder delivery system 202, which deposits the powder on the platform 203, or on the support surface 21 of the base 22a, 32a so as to form at least one layer of powder, preferably a plurality of superimposed layers of powder 70, for scanning a respective cross-section for each layer of the powder of polymeric material in accordance with a 3D reference model.

With reference to figure 2 for example, the polymeric powder is preferably fed from a container 202a.

Preferably, the machine comprises a roller or a blade 81 for flattening each powder layer which is deposited.

As said, the powder is of polymeric material, preferably thermoplastic material, for powder polyamides (PA), polystyrenes (PS), thermoplastic elastomers (TPE), and polyaryletherketones (PAEK), polycarbonate, or a combination of them.

For example, the powder of polymeric material is a powder of nylon polymer, more preferably Nylon 12 (PA12), or the powder of polymeric material comprises PET /PP, PE, HDPE, diamond plastic.

In a possible embodiment the polymeric powder comprises carbon or glass fibers, for example Alumide.

According to a possible embodiment, the at least one layer 70 of polymeric powder material is deposited on the platform 203 (in case the base 22a, 32a has to be formed) or on the support surface 21 of the respective base 22a, 32a (in case the case 22a, 32a is already provided) so as to be deposited on a substantially plane surface. Consequently, the first powder layer deposited 70 will have a substantially flat shape. After the deposition step of one powder layer 70 has completed, the additive manufacturing method according to the invention comprises the following steps: the deposited layer 70 of powder of polymeric material is premelted by means of the laser apparatus 80, which is operated to scan the cross-sections on each layer 70 with at least one first scan, in accordance with the 3D reference model of the treating profile elements 25, 35 or of both the base 22a, 23a and the treating profile elements 25,35. It should be noted that the first scan premelts the cross-sections of the layer 70, and causes the escape of air from the scanned cross-sections.

In a preferred embodiment, the deposited layer 70 of powder of polymeric material is premelted at a temperature below the melting point of the powder, and preferably comprised between 140°C and 160°C, preferably at about 150°C.

After the premelting step, the method comprises the step of selectively raising the temperature value of the deposited layer 70 of powder of polymeric material, preferably up to a value around the melting point of the polymeric material, and selectively sintering the deposited layer 70 of powder of polymeric material, by means of the laser apparatus 80, which is operated to scan the premelted cross-sections on each layer 70 with at least one second scan, in accordance with the 3D reference model of the treating profile elements 25, 35 or of both the base 22a, 23a and the treating profile elements 25,35.

In a preferred embodiment, the powder of polymeric material has melting point of the preferably at a temperature comprised between 170°C and 190°C, preferably at about 180°C.

It should be noted that the two consecutive scans allow a uniform pre-melting and sintering of the scanned cross-sections of each layer 70, and therefore allow a uniform growth of the treating profile elements 25, 35 or of both the base 22a, 23a and the treating profile elements 25,35.

The uniform premelt and sinter of the scanned cross-sections of each layer 70 is obtained by means of the laser apparatus 80, and no heating step of the polymer powder by conduction or irradiation is necessary.

After the scanning operation of each cross-section of the layer 70 by the laser apparatus 80 is completed, a new layer 70 of the powder of polymeric material is deposited.

According to a possible embodiment, the at least one first scan and the at least one second scan are provided by the laser apparatus 80 operating in continuous-wave mode.

Preferably, the second scan starts in a time interval such as to preserve the premelting temperature of the layer of powder which is premelted by the laser apparatus 80.

Generally, this temperature is comprised in a range between 20° - 50° below the melting point of the material.

For example, in a possible embodiment, the premelting temperature of the powder of polymeric material is comprised between 140°C and 160°C, preferably at about 150°C, and the melting point of the polymeric powder is comprised between 170°C and 190°C, preferably at about 180°C.

In order to preserve the premelting temperature of the layer of powder which is premelted by the laser apparatus 80, the second scan starts in a time interval comprised between 0 ms and 50 ms, preferably between 20 ms and 50 ms, more preferably substantially equal to 30 ms after the end of the first scan.

Carrying out a second scan after a very short time from the end of the first scan, avoids the cooling of the powder, and allows to provide uniform creasing profiles.

It has to be noted that the laser apparatus 80 is of the type which can be operated in both a pulsed and a continuous-wave mode. For example the laser apparatus 80 can be a CO2, laser, a fiber laser rod-based solid-state laser, such as Nd:YAG or a Nd:YVO₄ laser, Yb:YAG, etc.

Preferably, the laser apparatus 80 emits a laser beam with a wavelength in the Infrared region (IR), i.e. around 1064 nm.

In a possible embodiment, the support surface 21 of the base 22a, 32a is formed or pretreated to receive and retain the powder of polymeric material.

In a possible embodiment, before the deposition step of a powder layer 70, the additive manufacturing process comprise a preparatory step, wherein the support surface 21 of the base 22a, 32a is coated with an electrostatic coating to provide or increase the capacity of said support surface 21 of retaining said powder of polymeric material.

According to an alternative possible embodiment shown by way of example in figure 9, before the deposition step of a powder layer 70, the additive manufacturing process comprise a preparatory step, wherein the laser apparatus 80 scans the support surface 21 of the base 22a, 32a with a preparatory scan, for providing roughness or increasing the roughness of the support surface 21.

It has to be noted that the two different preparatory steps can be both provided before the deposition step of a layer of powder.

It has to be noted that the preparatory steps can be provided to the support surface 21 of the base 22a, 32a both in the case the base is provided as a preformed base, and in the case in which the base 22a, 32a is formed on the platform 203 by means of an additive manufacturing process.

The minimum roughness value is expressed in terms of arithmetic average of the roughness profile (Ra) in the range of 10 µm - 100 µm, preferably of 20 µm.

In a preferred embodiment, the support surface 21 has a melting temperature similar to the melting temperature of the powder of polymeric material which is deposited on it. The expression similar temperature is used to indicate equal temperatures or differences between the temperatures of less than 20°C, preferably differences of less than 10°C.

The support surface 21 can be a preformed support surface having per se an arithmetic average of the roughness profile (Ra) in the range of 10 µm - 100 µm, preferably of 20 µm, or can be a support surface which is laser processed to obtain such roughness.

In a possible embodiment, the desired roughness of the support surface 21 is obtained by scanning the support surface 21 with the laser apparatus 80, preferably operating in pulsed mode, for providing a foaming on the support surface 21 as shown by way of example in figures 9, 10, 12 and 13.

During this process, gas bubbles are created in the polymeric material of the support surface 21, which are included in the material during the cooling-down phase. Because of the included gas, the volume of the affected polymeric material increases and the locations, which have been laser-processed, appear raised, preferably with reliefs having a height comprised between 20 µm and 60 µm, preferably of about 40 µm.

It has to be noted that the rough surface provided with the preparatory scan of the laser apparatus 80 on the support surface 21, allows a good and uniform distribution and retention of the deposited powder on the support surface 21, avoiding the need of preheating the platform 203 on which the base 22a, 32a lies.

The action of the preparatory scan, provided by the laser apparatus 80, exerts an action on the base 22a, 32a, aimed at modifying its surface conformation, providing a rough surface on the support surface 21 which can comprise a foaming, or pattern for example with a plurality of straight adjacent lines, or curved adjacent lines, or a plurality of dots, or a combination of one or more of the preceding.

For example, with reference to figure 9, a pattern formed by adjacent dots, placed at 0.1 mm distance from each other can be realized by means of the laser apparatus 80 having a laser spot diameter comprised between 70 µm and 220 µm, preferably between 80 µm and 150 µm, and preferably equal to 90 µm, and an energy per unit area of about 80 mJ/mm².

In order to increase the productivity, the laser spot diameter can be increased. Advantageously, according to preferred embodiments, the laser spot diameter can be chosen to have a high value, comprised between 150 µm and 200 µm, preferably of about 200 µm, in order to increase the productivity

For example, starting from a laser spot diameter of about 80 µm, it can be increased up to a value of 200 µm in order to increase the productivity of the device, while maintaining the same energy per unit area of about 80 mJ/mm².

In order to maintain the same energy per unit area it is necessary to increase the power delivered by the laser, for example from a value of about 20 W to a value of about 50 W.

In particular, a foaming of the scanned support surface 21 of the base 22a, 32a is obtained, which has reliefs having a height comprised between 20 µm and 60 µm, preferably of about 40 µm.

It should be noted that the pattern provided on the support surface 21 by the laser apparatus 80 for providing a rough surface on the support surface 21, is made according to the particle size of the deposited powder. In other words, the pattern is in any case such as to include protrusions or reliefs and grooves suitable for accommodating the deposited powder, in order to have an effective distribution and retention of the deposited powder material.

As for example shown in figure 8, according to a possible embodiment, the particle size is comprised between 30 µm and 100 µm, preferably the particle size is substantially equal to 50 µm.

Therefore the grooves and reliefs formed by this pattern have such dimensions as to accommodate or retain at least one grain of the deposited powder.

The support surface 21 can have a smooth conformation, i.e. devoid of roughness. In this case, the action of the preparatory scan provided by the laser apparatus 80 has the effect of providing a roughness on the support surface 21.

Alternatively, the support surface 21 may initially have a rough conformation, and therefore in this case the action of the preparatory scan provided by the laser apparatus 80 has the effect of increasing this roughness.

As above mentioned, the applicant obtained effective distribution and retention of the deposited layer of powder 70 on the support surface 21, that does not require heating of the support surface 21 and/or the addition of additives such as adhesives, with a minimum roughness value expressed in terms of arithmetic average of the roughness profile (Rₐ) of Rₐ comprised between 10 µm and 100 µm, preferably comprised between 15 µm and 50 µm, and more preferably substantially equal to 20 µm.

An even more effective distribution and retention is obtained with a base 22a, 32a having a support surface 21 with a melting temperature similar to the melting temperature of the powder of polymeric material which is deposited on it.

Preferably, the preparatory scan is provided by the laser apparatus 80 operating in pulsed mode.

It has to be noted that the laser apparatus 80, operating in pulsed mode, emits a pulsed laser beam having a pulse duration (FWHM) in the nanosecond range, preferably comprised between 3 ns and 100 ns.

The maximum instantaneous optical power (Pₚₑₐₖ ) output by the laser apparatus 80 operating in pulsed mode has a value comprised between 10 W and 30 W, preferably equal to 20 W.

In order to be operated in the pulsed mode, the laser apparatus 80 can be Q - switched for obtaining nanosecond light pulses from the laser apparatus 80 by modulating the intracavity losses and thus the Q factor of the laser resonator.

According to a possible embodiment, the laser apparatus 80 is a Fiber laser apparatus with selectable pulse width having MOPA configuration.

According to a possible embodiment, the laser apparatus 80 provides a laser beam having a spot diameter comprised between 70 µm and 220 µm, preferably between 80 µm and 150 µm and preferably equal to 90 µm, and an energy per unit area of about 80 mJ/mm².

According to preferred embodiments, the laser spot diameter can be chosen to have a high value, comprised between 150 µm and 200 µm, preferably of about 200 µm, in order to increase the productivity.

With reference to figure 3B, the cross-sections on each layer 70 are scanned by the laser apparatus 80 with several adjacent marking lines 82', 82", 82‴, having a width defined by the spot diameter of the laser, i.e. comprised between 70 µm and 220 µm, preferably between 80 µm and 150 µm, and preferably equal to 90 µm, and an energy per unit area of about 80 mJ/mm².

In a preferred embodiment shown in figure 3B, the adjacent marking lines 82', 82", 82‴ overlap by 40% - 60%, preferably by 50% in the transverse direction: in other words, the adjacent marking lines 82', 82", 82‴ are overlapped by 40% - 60%, preferably by 50% of their width.

For example, in an embodiment wherein each marking line 82', 82", 82‴ has a width of 90 microns, adjacent marking lines 82', 82", 82‴ overlap 36 µm - 54 µm, preferably 45 µm, in the transverse direction.

It has to be noted that the spot diameter of the laser can be varied, by varying the focal point of the laser beam.

For example, as above discussed, in order to increase the productivity, the laser spot diameter can be increased, while maintaining the same energy per unit area. For example, if the laser spot diameter is increased, i.e. from 90 µm up to 180 µm or up to 200 µm, it is necessary to increase the power delivered by the laser from a value of about 20 W to a value of about 50 W, in order to maintain the same energy per unit area of about 80 mJ/mm².

The scanning process is repeated for each deposited layer of powder 70, in order to scan a plurality of cross-sections with a first and a second scan as above discussed, in accordance with the 3D reference model.

When all the cross-sections are scanned, the profile elements 25, 35 or both the base 22a, 32a and the profile elements 25, 35 are formed.

Figures 11, 12, 13 and 14 show a possible embodiment of a base 32a and the respective male treating profile element 35 formed on the support surface 21 of the base 32a.

At this point, if the additive manufacturing operation is carried out on a platform 203, the embossing plate 22, 32 is removed from the platform 203 and secured to one of the two rollers 20, 30 by fastening means 24.

Once the rotation of the pair of rollers 20, 30 has been activated, as can be seen for example in figures 1, the interposition of an item of the paper processing industry such as, for example, a cardboard 40 or a greetings card or a card stock for producing packaging or micro-packaging boxes or other items of the paper processing industry, between the male profiles 35 of the upper embossing plate 32 and the complementary female profiles 25 of the lower embossing plate 22 allows the treating pattern 50 to be carried out on the cardboard or corrugated cardboard 40.

Obviously, it should be noted that the distance between the upper cylinder 30 and the lower cylinder 20 can be adjusted according to the thickness of the cardboard 40 to be treated.

Going back to the forming process of the embossing plates 22, 32, it has to be noted that the base 22a, 32a and the profile elements 25, 35 can be formed in one piece by means of an additive manufacturing process, preferably by means of an SLS machine 200 shown in figure 2, which operates according to the 3D reference model of the whole embossing plates 22, 32.

Alternatively, only the male profiles 35 (or female profiles 25) can be formed on the respective base 22a, 32a, as said, by means of an additive manufacturing process, preferably by means of an SLS machine 200, which operates according to the 3D reference model of the treating profile elements 25, 35.

In other words, the forming process of the male profile 35 (or female profile 25) portions, or elements, on the respective base 22a, 32a, or in one piece with the respective base 22a, 32a of the upper embossing plate 32 (or the lower embossing plate 22), is guided by a specific software, in which the parameters of the additive manufacturing process can be entered and/or modified, such as, for example, the powder material used, the amount of powder which shall be deposited for each layer 70, the height (or thickness) desired for each layer 70 of powder to be scanned for forming each cross section of a treating profile element, the displacement speed of the laser apparatus 80 relative to the deposition surface, the delivery speed of the powder material, the spot dimension of the laser beam, or any combination of the preceding parameters.

According to one aspect of the invention, the profile elements 25, 35, or the profile elements 25, 35 and the respective base 22a, 32a are preferably made from a powder of one or more polymer, preferably a thermoplastic polymer such as polyamides (PA), polystyrenes (PS), thermoplastic elastomers (TPE), and polyaryletherketones (PAEK), polycarbonate, or a combination of them.

According to a possible embodiment, the polymeric powder comprises carbon or glass fibers, for example Alumide.

With reference to figure 8, according to an aspect of the present invention, the powder of polymeric material used has particle size comprised between 30 µm and 100 µm, preferably the particle size is substantially equal to 50 µm.

The layers of powder 70 deposited can be of different powders of polymeric materials or can be deposited using different deposition parameters such as, for example, one or more of the parameters referred to above. Preferably the powders of polymeric materials are compatible with one another to obtain a better distribution of the powder and reciprocal connection between the layers.

Figures 12 and 13 show for example some possible embodiments of the shape of the treating profile elements 35, obtained by means of successive deposition of several layers 70 of powder of polymeric material.

Figures 4 and 5A - 5C show a section view of possible embodiments of treating profiles according to the invention.

The male and female profile elements 35, 25 have predefined dimensions, namely the profiles are formed on the respective base 22a, 32a so that the male profile 35 has a lower support portion 38 with height Lₘ and a projecting portion 37' with height Lₛ and width Dₛ, while the female profiles 25 have a height L_{f} with hollows 37" of depth Lᵢ, and width Dᵢ adapted to house the projecting portions 37' of the male profiles 35. For example, as shown in figures 5B and 5C, the dimensions of the male profiles 35 are such that the lower supporting portion 38 has a height Lₘ of less than 0.8 cm, preferably equal to 0.6 cm, and the projecting portion 37' has a height Lₛ of less than 1 cm, preferably equal to 0.85 cm. The width Dₛ of the projecting portion 37' is less than 1 cm, preferably it is equal to 0.8 cm.

The dimensions of the female profiles 25 are such that the height Lₘ is less than 1.5 cm, preferably equal to 1 cm, and the hollow 37" has a depth Lᵢ less than 1 cm, preferably equal to 0.8 cm. The width Dᵢ of the hollow 37" is less than 1.5 cm, preferably it is equal to 1.3 cm. As can be noted for example from figures 5B and 5C, according to an aspect, the height Lₛ of the projecting portion 37' of the male profile 35 is preferably greater than the depth Lᵢ, of hollow 37" of the female profile, so that during the treating only the portions of the item of the paper processing industry to be processed (folded or embossed) come into contact with the creasing profiles.

As shown for example in the figures, according to an aspect of the invention, the section of the male treating profile 35 can comprise at least a curved surface, and preferably an end having curved or circular shape (see for example the embodiments of figures 4, 5B and 5C), or can have a flat end or upper surface. The two sides of the section can be parallel to each other and rectilinear or at least one of the two sides can be inclined so as to be incident.

In order to form profile elements, several powder deposition parameters can be selected, such as the powder material used for deposition, and which is therefore scanned by the laser apparatus 80, the thickness of each layer 70, the width of the deposited powder layer or a combination thereof. For example, deposition parameters can be selected such that the powder material is deposited in layers having a thickness of 0,05 - 0,150 mm.

Subsequently, the powder of polymeric material, preferably thermoplastic material, is premelted with a first scan, and then its temperature is raised around the melting point when it is scanned by the laser apparatus 80 with a second scan. When it cools, the polymeric powder material is sintered to a solid state.

As above anticipated, according to an aspect of the present invention, to facilitate distribution and retention of the layers 70 of powder deposited on the support surface 21 of the base 22a, 32a, the base 22a, 32a is scanned by the laser apparatus 80 with a preparatory scan, providing a rough surface on the support surface 21 as shown by way of example in figure 9.

According to a further aspect of the invention, coating with for example binding properties to retain the powder can be sprayed on the support surface 21 prior to the deposition of powder layers 70, to further facilitate said distribution and retention.

According to an aspect of the invention, an additive manufacturing device is used, preferably a selective laser sintering (SLS) machine 200, comprising a scanning laser apparatus 80 and a platform 203 as shown in figure 2 and 3A. The laser apparatus 80 can be guided along at least one axis (X), preferably along two axes and thus along a plane X-Y by a CAM software, in accordance with the 3D reference model of the treating profile elements 25, 35, or of both the base 22a, 32a and the treating profile elements 25, 35 to be formed. The laser apparatus 80 can be guided according to different types of kinematics, for example, according to core XY kinematics or gantry kinematics.

According to a possible embodiment, wherein the embossing plate 22, 32 is formed on the platform 203, the kinematics used are preferably of core XY type, according to which the laser apparatus 80 is moved along the plane X-Y parallel to the plane on which the support surface 21 of the base 22a, 32a lies, while the platform 203, on which the base 22a, 32a with the respective support surface 21 lies, is movable along an axis Z perpendicular to the above-mentioned plane X-Y along which the laser 80 moves. It should be noted that embodiments are also possible in which the relative movement along the Z axis between the platform 203 21 and the laser 80 can occur by means of movement of the latter relative to the platform 203 on which the base with the support surface 21 lies.

A section view of a detail of the treating profile element is shown in figure 4 and 5A. In particular, it should be noted that the layers 70 of material are deposited so as to form portions generally having a rectilinear extension.

The forming process according to the 3D reference model of the treating profile elements 25, 35, or of both the profile elements 25, 35 and the respective base 22a, 32a is carried out in a controlled manner, through a CAM control software, so as not to involve the parts of the base 22a, 32a on which no portion of profile element 25, 35 has to be formed.

In a further embodiment, adapted both to embossing and creasing an item of the paper processing industry, different profiles can be formed, adapted to embossing and creasing respectively, such that the two operations can be carried out simultaneously by the treating machine.

It should be noted, obviously, that the lower support portion 38 may not be present. According to an aspect of the present invention, the movement of the scanning apparatus 80 of the SLS machine 200 is controlled by the control unit which has acquired the 3D reference model of the treating profile elements, produced based on the pattern 50 of the treating lines to be obtained.

In a possible embodiment, the embossing plate 22, 32, is fixed to the platform 203 of the SLS machine due to the magnetic force between the base 22a, 32a made of magnetized polymeric material and the platform 203.

As said, according to a possible embodiment, a preparatory step can comprise scanning of the support surface 21 of the base 22a, 32a with the laser apparatus 80, preferably operating in pulsed mode, for providing a rough surface, and/or possible addition of coatings on the support surface 21 prior to the step of deposition of powder of polymeric material.

The rough surface of the support surface 21 has an arithmetic average of the roughness profile (Rₐ) in the range of 10 µm - 100 µm, preferably of 20 µm.

Furthermore, the support surface 21 has a melting temperature similar to the melting temperature of the powder of polymeric material which is deposited on it.

In a possible embodiment, the desired roughness of the support surface 21 is obtained by scanning the support surface 21 with the laser apparatus 80, preferably operating in pulsed mode, for providing a foaming on the support surface 21.

According to a possible embodiment, the preparation apparatus for preparing the plates and in particular the SLS machine 200 is provided, or is associated, with a control unit for forming the male and/or female profile elements.

In further detail, according to a possible embodiment, as shown for example schematically in figures 4 and 5A, male profile elements 35, or female profile elements 25, are formed by a SLS machine 200 coupled with a control unit. The control unit is associated with a memory unit.

The SLS machine 200 can deposit, for example by means of a powder delivery system 202, said powder on the platform 203, or on the support surface 21 of the base 22a, 32a if such base is arranged on the platform 203, or on a previously deposited powder layer 70 so as to deposit several superimposed layers of powder 70, for scanning respective cross-sections for each layer 70 of the powder of polymeric material in accordance with the 3D reference model, namely with length and shape that allows a given portion, or segment, of the treating pattern to be obtained.

The control unit controls the deposition parameters for depositing the layers 70 of powder, for example the quantity of powder dispensed by the powder delivery system 202 for each layer 70 or the granulometry of the powder, the powder delivery speed, the powder delivery temperature, and the control unit can further control the movement pattern performed by the laser apparatus 80 in terms of coordinates X-Y (or movement along at least an axis X), the scanning speed of the laser apparatus 80 relative to the deposition surface, and the lowering or raising of the platform 203 of the SLS machine 200 along the axis Z perpendicular to the plane X-Y of said surface, the spot dimension of the laser beam, the forming order of the profile elements, or any combination of the preceding parameters.

According to an aspect of the present invention, to obtain the treating profile elements 25, 35 with the desired geometries and dimensions, the control unit coordinates the height and the scanning speed of the laser apparatus 80, relative to the deposited powder surface.

According to an aspect, the formation of the cross-sections of the layers 70 by means of sintering of the powder for forming the profile elements 25, 35, or both the base 22a, 32a and the profile elements 25, 35, begins simultaneously with the beginning of the scanning step operated by the laser apparatus 80. When the powder is scanned with the first scan by the laser apparatus 80 it is premelted at a premelting temperature comprised between comprised between 140°C and 160°C, preferably at about 150°C. Then the powder is scanned with the second scan for raising the temperature of the powder around the melting point, which is comprised between 160°C and 200°C, preferably between 170°C and 190°C, preferably at about 180°C. As it cools layer after layer it solidifies, on the layer 70 below.

According to an aspect of the present invention, the forming operation of the profile elements 25, 35 or of the whole embossing plate 22, 32 is guided by the control unit which displays the treating pattern on a screen to facilitate monitoring of the operation by the operator.

According to a possible embodiment, the control unit allows display of the operation control parameters on a screen in order to assist the operator and speed up the operations.

The operator can select different parameters for each treating element 25, 35 according to the treating pattern 50 to be produced.

Figures 4, 12 and 13 show the creasing complex of the embossing plate 22, 32 once the male profiles 35 have been formed in accordance with the 3D reference model.

Following the same procedure as used for the upper embossing plate 32, the lower embossing plate 22 can be provided with female profiles 25.

The upper embossing plate 32 provided with the male profiles 35 is detached from the platform 203 and fixed to the upper cylinder 30 by means of fastening means 24 or by means of magnetic force.

Following the same procedure used for the upper embossing plate 32, the lower embossing plate 22 can be provided with female profiles 25 and fixed to the lower cylinder 20 by means of the fastening means 24 or by means of magnetic force.

The preparation step of the pair of rollers 20, 30 described is shown, for example, in figure 1 and is performed with the upper cylinder 30 and the lower cylinder 20 not in rotation.

The upper embossing plate 32 is positioned on the outer surface of the upper cylinder 30, while the lower embossing plate 22 is positioned on the outer surface of the lower cylinder 20.

By rotating the pair of rollers 20, 30 it is possible to carry out treating of the cardboard 40.

Lastly, figure 7 shows a block diagram of a possible embodiment of the method according to the invention.

In particular, the method according to the possible non-limiting embodiment comprises acquisition by a control unit, for example in a memory unit associated with it, of a treating pattern 50 (block 300).

This step can serve for example to acquire a file in one of the known formats, for example the .pdf format, contains a plurality of information such as, for example, the graphics of the pattern to be formed on the card stock, a layer with the profile to be die-cut and another layer containing the treating pattern.

According to an aspect of the invention, in the process, the treating profile is automatically formed and according to the treating lines and/or dots and/or shapes (and in general the profile), a 3D reference model of the treating profile elements to be made (block 310) is created by means of a 3D modelling software, for example the shape is determined (for example hexagonal) and/or the dimensions (for example the length) of the lower support portion 38 of the treating profile to be applied on the plate 22, 32 to obtain one or more treating portions of the pattern 50; the relative distance between the profile elements that shall be maintained during the printing is also determined, in accordance with the pattern 50.

Said reference model is saved as a file in a format suitable for being executed by a laser apparatus 80 (vector format, set (sequence) of *dxf or *plt* for example .stl file, or a CAD model usable for laser scanning).

The parameters saved in said file suitable for laser scanning are used by the SLS machine 200 to form the treating profiles 25, 35 or both the base 22a, 32a and the treating profile elements 25, 35.

Alternatively, a formed base 22a, 32a with a support surface 21 can be fixed on a platform 203 of the SLS machine 200, and the treating profile elements 25, 35 are formed thereon.

In a preferred embodiment, both the base 22a, 32a and the treating profile elements 25, 35 are formed in one piece, and in particular the treating profile elements 25, 35 are formed on the support surface 21 of the base 22a, 32a.

According to a possible embodiment, the support surface 21 can be sprayed with coatings, in order to increase the retention capacity of the support surface 21.

As said, this step is optional, for example if the material deposited and the material of the plate are chosen so as to allow effective interaction of the material deposited on the plate for the creation of the treating profile.

In a preferred embodiment, as said, by depositing polymeric powder, preferably Nylon or PET powder on a polymeric support surface 21, preferably made by Nylon or PET, wherein the support surface is provided with a rough surface by means of a preparatory scan provided by the laser apparatus 80, preferably operating in pulsed mode (block 330), the applicant obtained effective distribution and retention of the powder that does not require heating of the plate and/or the addition of additives such as adhesives.

This is followed by a step of deposition of layers 70 of powder material, in order to form the treating profile elements 25, 35, or both the base 22a, 32a and the treating profile elements 25, 35, according to the 3D reference model, in accordance with the pattern 50 (block 340).

As said, the step of forming treating elements 25, 35 on a base 22a, 32a, or both the base 22a, 32a and the treating profile elements 25, 35 in accordance with the 3D reference model is performed preferably by means of an additive manufacturing process.

In particular, the additive manufacturing process comprises premelting the deposited layer of powder 70 of polymeric material by means of the laser apparatus 80, which is operated to scan the cross-sections on each layer 70 with at least one first scan, in accordance with the 3D reference model of the treating profile elements 25, 35, or of both the base 22a, 23a and the treating profile elements 25, 35.

Furthermore, the additive manufacturing process comprises selectively raising the temperature value of the deposited layer 70 of powder of polymeric material, preferably up to a value around the melting point of the polymeric material, and sintering the deposited layer of powder 70 of polymeric material by means of the laser apparatus 80, which is operated to scan the premelted cross-sections on each layer 70 with at least one second scan, in accordance with the 3D reference model of said treating profile elements 25, 35 or of both the base 22a, 23a and the treating profile elements 25, 35.

A new layer of powder 70 of polymeric material is deposited after the scanning operation of each cross-section by the laser apparatus 80 is completed.

Preferably, the additive manufacturing process is operated by means of a SLS machine 200 having a powder delivery system 202 depositing powder polymeric material, and a scanning laser apparatus 80, wherein both can be moved in a known manner, for example preferably according to core XY kinematics for formation of the layers 70 which, by superimposition, form the treating profile element 25, 35 or both the base 22a, 32a and the treating profile elements 25, 35.

The SLS machine 200 can then be activated, by means of a control unit, to deposit, through the powder delivery system 202, the powder of polymeric material on the support surface 21 of the base 22a, 32a, in order to form the layers 70 which, by superimposition, constitute the treating profile elements.

In a further embodiment according to the invention, the SLS machine 200 is activated by the control unit to deposit, through the powder delivery system 202, the powder of polymeric material directly on the platform 203, in order to form the layers 70 which, by superimposition, constitute the base 22a, 32a and the treating profile elements 25, 35.

Therefore, the laser apparatus 80 scans the deposited powder following XY kinematics, remaining fixed relative to the vertical axis Z, while the base 22a, 32 with the respective support surface 21, which is positioned on the platform 203 of the machine 200, moves along the axis Z perpendicular to the plane X-Y, according to formation of the layers 70. In further detail, according to a possible embodiment, the platform 203 moves in the direction of the axis Z as the deposition operation proceeds, in order to create the space necessary for the superimposition of further layers 70.

The laser apparatus 80 premelts the deposited layer 70 of powder of polymeric material by means of at least one first scan, in accordance with the 3D reference model of said treating profile elements 25, 35 or of both said base 22a, 23a and said treating profile elements 25, 35 (block 350).

The laser 80 increases the temperature of the premelted powder layer 70, by means of at least one second scan, in accordance with the 3D reference model of said treating profile elements 25, 35 or the base 22a, 32a and the treating profile elements 25, 35 according to the parameters set by the operator via the control unit (block 360). Lastly, after completing the second scanning operation, the powder is sintered in solid state and left to cool on the support surface 21 (block 370).

Obviously modifications or improvements can be made to the invention as described, dictated by contingent or particular reasons, without departing from the scope of the invention.

## Claims

1. A method for preparing plates (22,32) for cylinders (20, 30) to treat items of the paper processing industry (40), wherein the plates (22, 32) comprise a base (22a, 32a) having a support surface (21) and treating profile elements (25, 35) on said support surface (21) of said base (22a, 32a), the method comprising an additive manufacturing process, and comprising the following steps:
a. acquiring a treating pattern (50) to be produced on the item of the paper processing industry (40) or acquiring the shape of said base (22a, 32a) of the plates (22, 32) and said treating pattern (50);
b. creating a 3D reference model of at least the treating profile elements (25, 35) according to the treating pattern (50) or a 3D reference model of both said base (22a, 32a) and said treating profile elements (25, 35);
c. distributing at least one layer (70) of a powder of polymeric material, preferably a powder of thermoplastic polymeric material, on a support surface (21) of said base (22a, 32a), or on a platform (203);
d. scanning the deposited layer (70) of powder of polymeric material by means of a laser apparatus (80) for selectively sintering said deposited layer (70) of powder of polymeric material, wherein said laser apparatus (80) is operated to scan the cross-sections on each layer (70), in accordance with the 3D reference model of said treating profile elements (25, 35) or of both said base (22a, 23a) and said treating profile elements (25,35)
wherein said support surface (21) of said base (22a, 32a), or said platform (203), is formed or pretreated to receive and retain the powder of polymeric material, and wherein a new layer (70) of said powder of polymeric material is deposited after the scanning operation of at least one cross-section by the laser apparatus (80) is performed.

2. Method according to claim 1 wherein said step d) is provided by said laser apparatus (80) operating in continuous-wave mode.

3. Method according to claims 1 or 2, wherein said step d) comprises
a step d1) of premelting the deposited layer (70) of powder of polymeric material by means of at least one laser apparatus (80), which is operated to scan the cross-sections on each layer (70) with at least one first scan, in accordance with the 3D reference model of said treating profile elements (25, 35) or of both said base (22a, 23a) and said treating profile elements (25, 35),
and a step d2) for selectively raising the temperature value of the deposited layer (70) of powder of polymeric material and selectively sintering the deposited layer (70) of powder of polymeric material by means of said laser apparatus (80), which is operated to scan the premelted cross-sections on each layer (70) with at least one second scan, in accordance with said 3D reference model of said treating profile elements (25, 35) or of both said base (22a, 23a) and said treating profile elements (25,35).

4. Method according to claim 3 wherein said second scan starts in a time interval comprised between 0 ms and 50 ms, preferably between 20 ms and 50 ms, more preferably substantially equal to 30 ms after the end of the first scan.

5. Method according to any of claims 1 - 4, comprising a step of scanning said support surface (21) of said base (22a, 32a) by means of a laser apparatus (80) providing a preparatory scan, to provide roughness or increase the roughness of said support surface (21) to provide or increase the capacity of said support surface (21) of retaining said powder of polymeric material, wherein said preparatory scan is preferably provided by said laser apparatus (80) operating in pulsed mode.

6. Method according to claim 5, wherein the minimum roughness value, expressed in terms of arithmetic average of the roughness profile (Ra) is between 10 µm and 100 µm, preferably between 15 µm and 50 µm, and more preferably substantially equal to 20 µm, and wherein said roughness preferably comprises reliefs having a height between 20 µm and 60 µm, more preferably of about 40 µm.

7. Method according to any one of claims 5 or 6, wherein said preparatory scan provides a foaming on the support surface (21) of said base (22a, 32a) to provide roughness or increase the roughness of said support surface (21).

8. A method according to any one of claims 1-7, comprising the step of coating said support surface (21) or said platform (203), preferably with an electrostatic coating, to provide or increase the capacity of said support surface (21) of retaining said powder of polymeric material.

9. Method according to any one of claims 1-8, wherein said laser apparatus (80) provides a laser beam having a spot diameter comprised between 70 µm and 220 µm, preferably between 80 µm and 150 µm, and preferably equal to 90 µm.

10. Method according to any one of claims 1-9, wherein said support surface (21) of said base (22a, 32a), or said platform (203), is lowered along a vertical direction, along a vertical axis (Z), when the scanning of each cross-section by the laser apparatus (80) is completed, or viceversa.

11. Method according to any one of claims 1-10, wherein said additive manufacturing process is a selective laser sintering (SLS) process.

12. Method according to any one of claims 1-11, wherein said polymeric powder is distributed by means of a powder delivery system (202), which deposits said powder on the support surface (21) of said base (22a, 32a), or on said platform (203), so as to form at least one layer of powder (70), preferably a plurality of superimposed layers of powder (70), for scanning respective cross-sections for each layer of the powder of polymeric material in accordance with the 3D reference model provided in said step b).

13. Method according to any one of claims 1-12, wherein said polymeric powder comprises one or more polymer such as polyamides (PA), Nylon 11, Nylon 12, polystyrenes (PS), thermoplastic elastomers (TPE), and polyaryletherketones (PAEK), polycarbonate, or a combination of one or more of them, and/or wherein said polymeric powder comprises carbon or glass fibers, for example Alumide.

14. Method according to any one of claims 1-13, further comprising a step of displaying and/or modification of the forming parameters of the treating profile elements (25,35) or of both the base (22a, 32a) and the treating profile elements (25,35), said parameters preferably comprising at least one of the height of the laser apparatus (80) relative to the deposition surface of the polymeric powder, the scanning speed of the laser apparatus (80) relative to the deposition surface of the polymeric powder, the delivery speed of the polymeric powder, the spot dimension of the laser beam, or any combination of the preceding parameters.

15. A device (200) for preparing plates (22, 32) for cylinders (20, 30) to treat items of the paper processing industry (40), according to the method according to any one of the preceding claims, wherein said plates (22, 32) comprise said base (22a, 32a) having said support surface (21), and treating profile elements (25, 35) on the support surface (21) of said base (22a, 32a), the device (200) comprising at least one platform (203) for supporting at least one layer (70) of polymeric powder, at least one laser apparatus (80) for scanning said at least one layer of polymeric powder (70), deposited on said platform (203) or on the support surface (21) of said base (22a, 32a) according to a 3D model of the treating profile elements (25, 35) or of both said base (22a, 23a) and said treating profile elements (25, 35), wherein preferably said support surface (21), or said platform (203), is formed or pretreated to receive and retain the powder of polymeric material so as to have a roughness with a minimum roughness value expressed in terms of arithmetic average of the roughness profile (Ra), of between 10 µm and 100 µm, preferably between 15 µm and 50 µm, and more preferably substantially equal to 20 µm, and/or wherein preferably said platform (203) on which said base (22a, 32a) lies is movable along at least one axis (Z), substantially perpendicular to the plane on which said platform (203) lies.
